# FASCICULE DE BREVET EUROPEEN

(11) **EP 1 095 605 B1**
(45) Date de publication et mention de la délivrance du brevet: **15.09.2004**
(21) Numéro de dépôt: 99121440.4
(22) Date de dépôt: 28.10.1999
(51) Int. Cl.: A47J 31/06, A47J 31/40

(54) **Dispositif pour l'éjection de capsule**
Auswurfvorrichtung für Kartusche
Ejecting apparatus for cartridge

(43) Date de publication de la demande: 02.05.2001
(73) Titulaire: SOCIETE DES PRODUITS NESTLE S.A., 1800 Vevey (CH)
(72) Inventeur: Kollep, Alexandre, 8590 Romanshorn (CH); Fischer, Daniel, 8590 Romanshorn (CH); Stieger, Mischa, 9000 St-Gall (CH)
(74) Mandataire: Borne, Patrice Daniel

(56) Documents cités:
- EP-A- 0 555 775
- EP-A- 0 891 734
- FR-A- 2 745 995
- US-A- 3 470 812
- US-A- 5 794 519

## Description

La présente invention concerne un dispositif pour l'éjection de capsule d'une machine à café comprenant une machoire avec une partie fixe et une partie mobile.

Il est déjà connu des systèmes permettant l'éjection en fin d'extraction de capsules dans une machine à café comprenant une machoire. Le principe est basé sur la présence d'un éjecteur dans la partie inférieure de la machoire et le basculement dudit éjecteur pour évacuer la capsule extraite, au moment de l'ouverture de ladite machoire. L'inconvénient des dispositifs de l'état de la technique est que l'axe de rotation de l'éjecteur est trop éloigné de la portion de café à évacuer, ce qui entraine un effet catapulte sur ladite portion de café, qui lors de la chute salit la machine, dans le cas d'une extraction de capsule fermée, qui s'ouvre sous l'effet de la montée en pression pendant l'extraction. Le brevet US 5794519 concerne un tel dispositif.

Le but de la présente invention est de mettre au point un dispositif d'éjection , dans lequel on évite l'effet catapulte et on arrive à obtenir un glissement de la capsule dans un bac à déchets intégré dans la machine.

La présente invention concerne un dispositif selon la revendication 1.

Le téton prévu sur le bras de traction peut avoir toute forme géométrique possible. Ce téton a de préférence une forme cylindrique pour bien accrocher dans les moyens d'accrochage, qui ont ainsi une forme complémentaire de celle du téton.

Il est possible dans le dispositif selon l'invention d'extraire des capsules fermées ou ouvertes. Par capsules fermées, on peut envisager les capsules faisant l'objet du brevet EP 512'468 et EP 602'203 au nom du demandeur. Il n'y a cependant aucune limitation à pouvoir également utiliser le dispositif selon l'invention pour d'autres sachets ou capsules ou cartouches fermées. Il est également possible d'utiliser le dispositif selon l'invention pour des cartouches ouvertes, par exemple des cartouches en matière plastique ou des sachets en papier filtre et en non tissés.

Le dispositif selon l'invention peut également être intégré dans tout type de machine à café, prévue pour l'extraction de capsules ou sachets. On peut , par exemple intégrer le dispositif dans la machine faisant l'objet de la demande de brevet EP 99117107.5 déposée le 31 août 1999 au nom du demandeur.

L'éjecteur du dispositif selon l'invention est constitué par un système annulaire plat comprenant sur une partie dudit système annulaire les moyens d'accrochage. Ces moyens d'accrochage sont de préférence disposés sur le côté dudit système annulaire et perpendiculairement à l'axe de rotation dudit éjecteur. L'axe de rotation de l'éjecteur est disposé juste derrière le logement de la capsule, par exemple à une distance comprise entre 5 et 15 mm du logement.

Dans une forme de réalisation préférée, le bras de traction comprend un second téton au même niveau que le premier téton, ce second téton étant prévu pour coopérer avec une came de guidage de la partie fixe de la machoire. Comme pour le premier téton, celui-ci peut avoir toute forme géométrique possible. De préférence , il a une forme cylindrique identique à celle du premier téton.La came de guidage de la partie fixe de la machoire a une ouverture permettant juste l'introduction et le déplacement dudit second téton. Cette came permet un bon guidage du bras de traction pour avoir une bonne éjection et un bon retour de l'éjecteur en position initiale.

Au moment de l'ouverture de la machoire , il ne faut pas que la capsule remonte avec la partie mobile de la machoire. Il faut que la capsule reste dans le logement de la partie fixe de la machoire. Pour ce faire, il est prévu sur l'éjecteur des moyens de retenue de la capsule. Ces moyens peuvent être de toute sorte. Par exemple, il est possible d'utiliser les moyens de retenue faisant l'objet de la demande de brevet EP 97202208.1 du 14 Juillet 1997 au nom du demandeur.

La taille du dispositif selon l'invention n'est pas critique. On considère normalement une machine à café ayant une longueur de parties fixe et mobile de l'ordre de 10 à 30 cm.

Les moyens d'accrochage doivent d'une part permettre à la machoire de s'ouvrir et ensuite ils doivent permettre l'éjection de la capsule usagée. Ils sont donc constitués d'abord d'un évidement permettant au téton de glisser et ensuite d'un crochet permettant au téton de bien soulever l'éjecteur.

La suite de la description est faite en référence aux dessins sur lesquels
Fig. 1 est une coupe partielle du dispositif avec la machoire fermée,
Fig. 2 est une vue schématique de la figure 1, de l'autre côté,
Fig. 3 est une coupe partielle du dispositif en cours d'ouverture,
Fig. 4 est une vue schématique de la figure 3, de l'autre côté,
Fig. 5 est une vue schématique de face selon la figure 3,
Fig. 6 est une coupe partielle du dispositif complètement ouvert,
Fig. 7 est une vue schématique de la figure 6, de l'autre côté et
Fig. 8 est une représentation schématique de l'éjecteur vu de dessus.

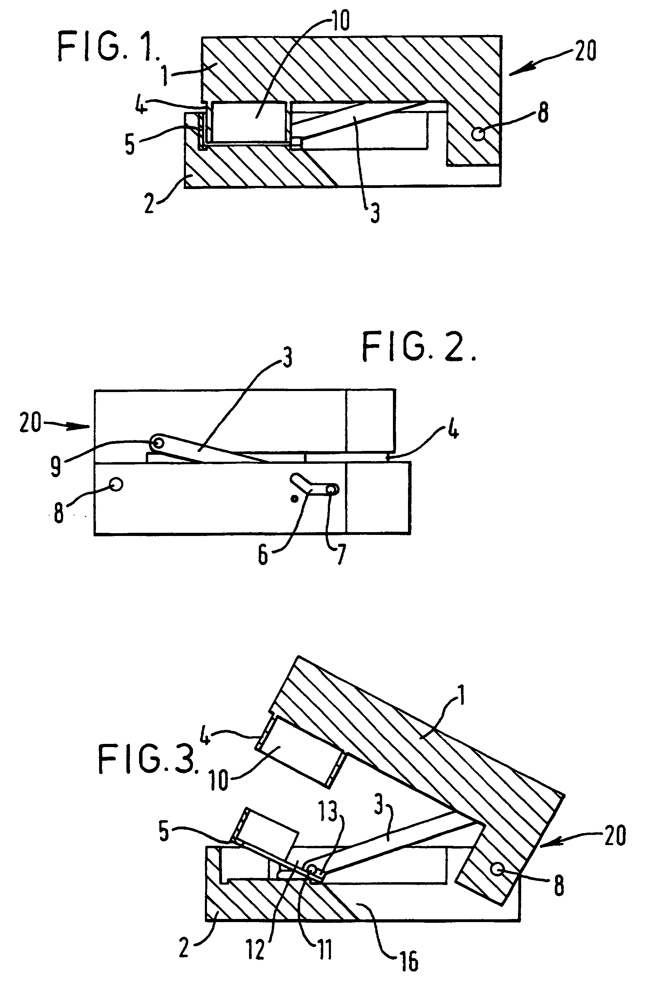

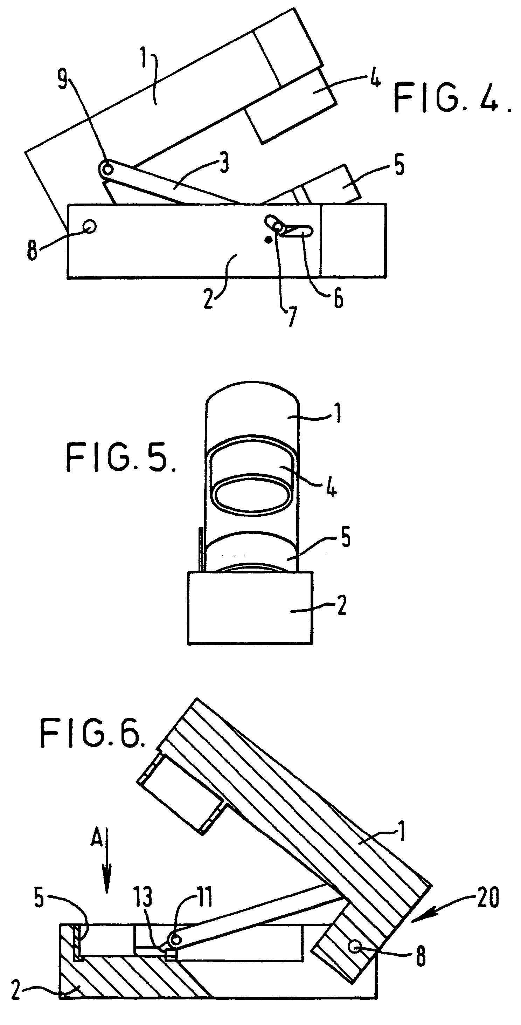

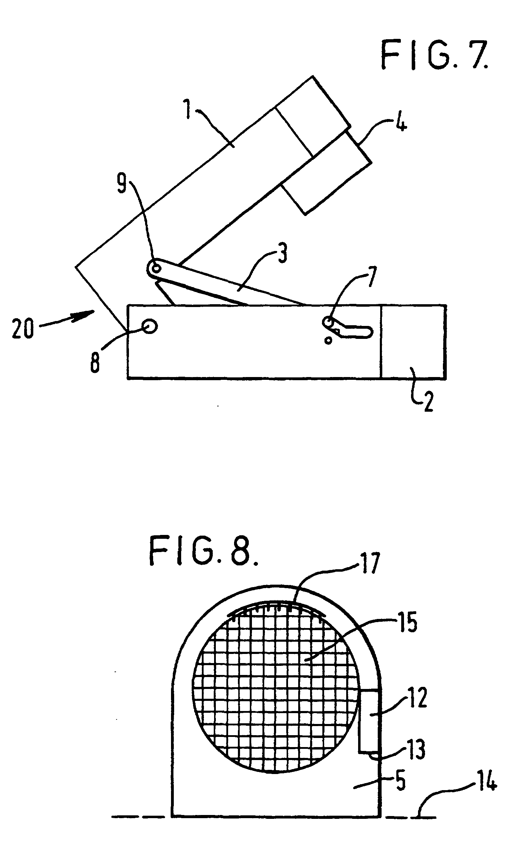

Les fig. 1 et 2 montrent le dispositif fermé, les fig. 3 à 5 le dispositif mi-ouvert et les fig. 6 et 7 le dispositif complètement ouvert. On a la machoire (20) avec sa partie mobile (1) et sa partie fixe (2), ladite machoire s'ouvrant et se fermant selon un axe de rotation (8). On voit bien le bras de traction (3) avec le deuxième téton (7) dans la came de guidage (6). Ce bras (3) est à rotation autour de l'axe (9). Le logement (10) pour la capsule est formé grâce à la cage (4) sur la partie mobile (1) de la machoire (20). L'éjecteur (5) est mu à rotation selon l'axe (14) grâce au téton (11) du bras de traction (3). Les tétons (11) et (7) sont dans le prolongement l'un de l'autre. Ils sont normalement de forme cylindrique. L'éjecteur présente un évidement (12) et un crochet (13) permettant le basculement dudit éjecteur avec le bras (3).

Le fonctionnement du dispositif selon l'invention est le suivant : le consommateur dispose en position ouverte de la machoire la capsule à extraire (non représentée) sur la partie fixe (2) de la machoire (20) au niveau de l'éjecteur (5). Il ferme ensuite la machine avec le dispositif non représenté faisant l'objet de la demande de brevet EP précitée 99117107.5 : la capsule est dans le logement (10) formé par la cage (4). Il effectue l'extraction de la capsule d'une manière que nous ne décrivons pas présentement , car l'extraction ne fait pas l'objet de la présente invention. Le consommateur agit ensuite pour l'ouverture de la machoire sur les moyens d'ouverture faisant l'objet de la demande de brevet précitée. En se soulevant, la partie mobile (1) de la machoire (20) entraine le bras (3) et aussi le téton (11) au bout dudit bras. Au moment de l'ouverture de la machoire, la bordure inférieure de la capsule est retenue par des moyens (17) pour qu'elle reste bien sur l'éjecteur (5). Dans la première partie de sa course, le téton glisse sur l'évidement (12) de l'éjecteur (5) et lorqu'il arrive dans la position de la fig. 3 à 5, ledit téton (11) épouse la forme intérieure du crochet (13) et soulève l'éjecteur (5). A ce moment , la capsule glisse dans la goulotte (16) vers le bac à déchets. Lorsque l'éjecteur est assez haut, le téton (11) décroche du crochet (13) et l'éjecteur retombe dans la position des fig. 6 et 7. La came de guidage (6) avec son téton (7) permet de bien guider le téton (11) dans l'éjection et la retombée de l'éjecteur (5).

La fig. 8 est une vue dans la direction de la flèche A (Fig. 6) permettant de bien voir l'éjecteur. Cette figure met bien en évidence sa forme annulaire et l'évidement (12) et le crochet (13) pour l'éjection. La plaque (15) est une pièce séparée qui comporte des éléments en creux et en relief si on fait l'extraction d'une capsule fermée. Les moyens de retenue (17) font partie intégrante de l'éjecteur et sont disposés sur l'avant de la partie fixe (2) de la machoire (20).

Le dispositif selon l'invention est utilisable sur tout type de machine à café comprenant un type d'extraction pour des doses prêtes à l'emploi.

## Revendications

1. Dispositif pour l'éjection de capsule d'une machine à café comprenant une machoire (20) avec une partie fixe (2) et une partie mobile (1), lesdites parties de machoire ménageant en position de fermeture un logement (10) pour ladite capsule sur l'avant de ladite machoire , la partie mobile étant montée à rotation sur l'arrière (8) de la partie fixe , ledit dispositif comprenant sur la partie fixe au niveau du logement de la capsule un éjecteur (5) monté à rotation selon un axe (14) juste derrière le logement de la capsule et un bras de traction (3) solidaire de la partie mobile au dessus de l'axe de rotation de ladite partie mobile avec à l'extrémité dudit bras un premier téton (11) prévu pour coopérer avec des moyens d'accrochage (13) de l'éjecteur (5) pour soulever ledit éjecteur.

2. Dispositif selon la revendication 1, **caractérisé en ce que** l'éjecteur (5) est constitué par un système annulaire comprenant sur une partie du système annulaire les moyens d'accrochage (13).

3. Dispositif selon l'une des revendications 1 ou 2, **caractérisé en ce que** le bras de traction (3) comprend un second téton (7) au même niveau que le premier téton, ce second téton étant prévu pour coopérer avec une came de guidage (6) de la machoire fixe (2).

4. Dispositif selon l'une des revendications 1 à 3, **caractérisé en ce que** l'éjecteur (5) comprend des moyens de retenue (17) de la capsule.

5. Dispositif selon l'une des revendications 1 à 4, **caractérisé en ce que** la longueur des parties fixe et mobile de la machoire est comprise entre 10 et 30 cm.

6. Dispositif selon l'une des revendications 1 à 5, **caractérisé en ce que** les moyens d'accrochage (13) sont constitués par un évidement se terminant en forme de crochet.

## Claims

1. Device for ejecting a capsule of a coffee machine comprising a jaw (20) with a fixed part (2) and a movable part (1), the said jaw parts forming, in the closed position, a receptacle (10) for the said capsule on the front of the said jaw, the movable part being mounted rotatably on the rear (8) of the fixed part, the said device comprising, on the fixed part, at the position of the capsule receptacle, an ejector (5) mounted rotatably on an axis (14) just behind the capsule receptacle and a pulling arm (3) secured to the movable part above the axis of rotation of the said movable part with, at the end of the said arm, a first pin (11) designed to cooperate with catch means (13) of the ejector (5) in order to lift the said ejector.

2. Device according to Claim 1, **characterised in that** the ejector (5) consists of an annular system comprising the catch means (13) on a part of the annular system.

3. Device according to one of Claims 1 and 2, **characterised in that** the pulling arm (3) comprises a second pin (7) level with the first pin, this second pin being designed to cooperate with a guide cam (6) of the fixed jaw (2).

4. Device according to one of Claims 1 to 3, **characterised in that** the ejector (5) comprises means (17) for retaining the capsule.

5. Device according to one of Claims 1 to 4, **characterised in that** the length of the fixed and movable parts of the jaw is between 10 and 30 cm.

6. Device according to one of Claims 1 to 5, **characterised in that** the catch means (13) consist of a recess terminating in the shape of a hook.

## Patentansprüche

1. Kapselauswurfvorrichtung für eine Kaffeemaschine, umfassend eine Halterung (20) mit einem feststehenden Teil (2) und einem beweglichen Teil (1), wobei die Halterungsteile in geschlossener Stellung im vorderen Bereich der Halterung eine Aufnahme (10) für die Kapsel bilden und der bewegliche Teil im hinteren Bereich (8) des feststehenden Teils drehbar montiert ist, wobei die Vorrichtung auf dem feststehenden Teil auf Höhe der Aufnahme für die Kapsel einen Auswerfer (5), der auf einer Achse (14) dicht hinter der Aufnahme für die Kapsel drehbar montiert ist, und einen Zugarm (3) aufweist, der an dem beweglichen Teil oberhalb der Drehachse des beweglichen Teils angebracht ist, wobei am Ende des Arms ein erster Zapfen (11) zum Zusammenwirken mit Einhakmitteln (13) des Auswerfers (5) vorgesehen ist, um den Auswerfer anzuheben.

2. Vorrichtung nach Anspruch 1, **dadurch gekennzeichnet, daß** der Auswerfer (5) aus einem ringförmigen System besteht, das auf einem Teil des ringförmigen Systems die Einhakmittel (13) aufweist.

3. Vorrichtung nach einem der Ansprüche 1 oder 2, **dadurch gekennzeichnet, daß** der Zugarm (3) auf derselben Höhe wie der erste Zapfen einen zweiten Zapfen (7) aufweist, der zum Zusammenwirken mit einer Führungskurve (6) des feststehenden Halterungsteils (2) vorgesehen ist.

4. Vorrichtung nach einem der Ansprüche 1 bis 3, **dadurch gekennzeichnet, daß** der Auswerfer (5) Mittel (17) zum Zurückhalten der Kapsel aufweist.

5. Vorrichtung nach einem der Ansprüche 1 bis 4, **dadurch gekennzeichnet, daß** die Länge des feststehenden und des beweglichen Teils 10 bis 30 cm beträgt.

6. Vorrichtung nach einem der Ansprüche 1 bis 5, **dadurch gekennzeichnet, daß** die Einhakmittel aus einer Ausnehmung bestehen, die in Form eines Hakens endet.
